# EUROPÄISCHE PATENTANMELDUNG

(11) **EP 2 141 431 A2**
(43) Veröffentlichungstag der Anmeldung: **06.01.2010**
(21) Anmeldenummer: 08021144.4
(22) Anmeldetag: 05.12.2008
(51) Int. Cl.: F28D 20/00

(54) **Warmwasser-Speicherbehälter mit einem thermischen Ventil**

(30) Priorität: 01.07.2008 DE 202008008800 U
(71) Anmelder: Gebr. Bruns GmbH, 26683 Saterland (DE)
(72) Erfinder: Buchholz, Jörg, 48282 Emsdetten (DE)
(74) Vertreter: Habbel, Ludwig

(57) **Zusammenfassung**

Warmwasser-Speicherbehälter einer häuslichen Heizungs- oder Warmwasserinstallation, mit wenigstens einem ersten, als Strömungskanal bezeichneten, Wasser enthaltenden Raum, wobei der Strömungskanal an einen zweiten Wasser enthaltenden Raum angrenzt, und wobei wenigstens eine Durchtrittsöffnung vorgesehen ist, durch welche Wasser von dem einen in den anderen der beiden Räume gelangen kann, wobei die Durchtrittsöffnung (4) mittels eines beweglichen Ventilkörpers (8,9) verschließbar ist, und dass als Antrieb des Ventilkörpers(8,9) ein Dehnstoffelement (11) vorgesehen ist, welches temperaturabhängig seine Ausdehnung und dementsprechend die Lage des Ventilkörpers (8,9) ändert.

## Beschreibung

Die Erfindung betrifft einen Warmwasser-Speicherbehälter nach dem Oberbegriff des Anspruches 1.

Derartige Speicherbehälter sind aus der Praxis bekannt. Als mit Wasser gefüllte Räume sind beispielsweise das Hauptvolumen des Speicherbehälters, also der wesentliche Teil des Innenraumes des Speicherbehälters anzusehen sowie andererseits ein Strömungskanal, durch den heißes Wasser in den Speicherbehälter einströmt. Dieses heiße Wasser kann beispielsweise vom Kesselvorlauf kommen, es kann beispielsweise Temperaturen von etwa 45° C aufweisen, für eine Fußbodenheizung, oder Temperaturen von etwa 80° C, zur Temperierung von Brauchwasser. Es wird üblicherweise mittels einer Pumpe gefördert, und wenn beispielsweise die Wärmeenergie einer Wärmepumpe genutzt wird, sind vergleichsweise hohe Strömungsgeschwindigkeiten des einströmenden Wassers vorgesehen.

Eine besonders effiziente Nutzung des Speicherbehälters hat sich in der Praxis in der Form etabliert, dass das im Speicher enthaltene Wasser in unterschiedlichen Temperaturzonen geschichtet ist, so dass ein so genannter Schichtspeicher verwirklicht ist. Die Einspeisung des in den Behälter einströmenden heißen Wassers erfolgt üblicherweise allein aufgrund der Konvektion, also in Abhängigkeit von den Temperaturunterschieden zwischen dem einströmenden Wasser und dem im Speicher bereits befindlichen Wasser. Durchtrittsöffnungen im Einströmkanal sind in solchen Fällen vorgesehen und derart angeordnet, dass das einströmende Wasser nicht automatisch gleich durch die Durchtrittsöffnungen in das Hauptvolumen des Speicherbehälters einströmen kann, sondern vielmehr so weit wie möglich aufsteigt.

Bei den vorbeschriebenen, konvektionsgestützten Schichtspeichern ist nachteilig, dass die Schichtung der einzelnen Temperaturbereiche nur bei geringen Strömungsgeschwindigkeiten des einströmenden Wassers sichergestellt werden kann. Wenn beispielsweise hohe Volumenströme vorliegen, wie bei Anbindung einer Wärmepumpe, führen Verwirbelungen innerhalb des Speichers häufig dazu, dass die Schichten durchbrochen und aufgelöst werden, mit Nachteilen für die Effizienz des Speichers.

Die denkbare Verwendung von temperaturabhängig gesteuerten Ventilen ist insofern nachteilig, als auch hierdurch die Effizienz des Speichers deutlich gemindert wird: Ähnlich wie Wärmeverluste, die Effizienz des Speichers nachteilig beeinträchtigen, wird die Effizienz auch durch aufgenommene elektrische Energie beeinträchtigt, die für den Betrieb von Sensoren und für die motorische Handsteuerung von Ventilen erforderlich wäre.

Der Erfindung liegt die Aufgabe zugrunde, einen gattungsgemäßen Warmwasser-Speicherbehälter dahingehend zu verbessern, dass dieser unabhängig von äußerer Fremdenergie und unabhängig von dem Volumenstrom einströmenden Wassers, das Einschichten von einströmendem Wasser in den für dieses Temperaturniveau des einströmenden Wassers vorgesehenen Schichtbereich des Speicherbehälters ermöglicht. Diese Aufgabe wird durch einen Warmwasser-Speicherbehälter mit den Merkmalen des Anspruches 1 gelöst.

Die Erfindung schlägt mit anderen Worten vor, eine Ventilanordnung zu verwenden, so dass das Öffnen und Schließen der Durchtrittsöffnung, also das Einströmen von zuströmendem Wasser aus einem ersten Raum in einen zweiten Raum des Speicherbehälters unabhängig von der Strömungsgeschwindigkeit des zuströmenden Wassers gesteuert werden kann. Der Antrieb des beweglichen Ventilkörpers erfolgt vorschlagsgemäß durch ein Dehnstoffelement, also unabhängig von äußerer Energie, wie beispielsweise einem elektrischen Antrieb, in dem das Dehnstoffelement temperaturabhängig seine Ausdehnung ändert und entsprechend dieser Ausdehnungsänderung die Lage des Ventilkörpers verändert wird, so dass der Ventilkörper in Abhängigkeit von der Ausdehnung des Dehnstoffelementes die Durchtrittsöffnung entweder verschließt oder öffnet, oder eine Zwischenstellung einnimmt, in welcher die Durchtrittsöffnung teilweise geöffnet ist.

Um die Rückstellung des Dehnstoffelementes bei abnehmenden Temperaturen zuverlässig sicherzustellen, kann vorteilhaft das Dehnstoffelement gegen die Wirkung einer Feder arbeiten, die daher als Rückstellfeder dient.

Das Dehnstoffelement kann vorteilhaft innerhalb eines vergleichsweise breiten Temperaturbereiches seine Ausdehnungsänderung vornehmen und nicht etwa schlagartig bei einem bestimmten Temperaturpunkt. Auf diese Weise ist sichergestellt, dass abhängig vom Temperaturniveau die gewünschten unterschiedlichen Öffnungszustände der Durchtrittsöffnung erzielt werden. So kann vorteilhaft die Ausdehnungsänderung vom minimalen bis zum maximalen Ausdehnungszustand des Dehnstoffelementes über einen Temperaturbereich von wenigstens 10° C vorgesehen sein, vorteilhaft über einen Temperaturbereich von beispielsweise 25° - 40° C. Vorteilhaft kann eine Relativbewegung zwischen zwei unabhängig voneinander angetriebenen Ventilkörpern vorgesehen sein. Auf diese Weise wird eine Ventilsteuerung erreicht, die von der Temperaturdifferenz zwischen den beiden mit Wasser gefüllten Räumen beeinflusst wird. Wenn in beiden Räumen das Temperaturniveau sich gleichermaßen verändert, bewegen sich die Ventilkörper zueinander nicht, sondern behalten ihre Relativstellung bei. Erst wenn es zu einer Temperaturdifferenz kommt, resultiert daraus eine Relativbewegung der beiden Ventilkörper zueinander, so dass dann ggf. die Durchtrittsöffnung geöffnet wird.

Die Ventilkörper können vorzugsweise als Platte ausgestaltet sein, die in der Plattenebene verschiebbar gelagert ist. Im Vergleich zu Schwenkbewegungen wird durch diese Beweglichkeit des Ventilkörpers eine möglichst gleichbleibende Ausgestaltung eines von Wasser durchströmbaren Bereiches sichergestellt, so dass unerwünschte Verwirbelungen möglichst vermieden werden.

Vorteilhaft können bei derartig plattenförmigen Ventilkörpern Durchbrechungen vorgesehen sein, wobei die Anordnung zweier plattenförmiger Ventilkörper eine Schließstellung dadurch sicherstellt, dass die Durchbrechungen versetzt zueinander angeordnet sind, so dass in einer Grundstellung der Ventilanordnung, beispielsweise unterhalb der Starttemperatur, die zu einer Ausdehnung der Dehnstoffelemente führt, die Ventilanordnung geschlossen und dementsprechend die Durchtrittsöffnung verschlossen ist.

Gemäß einer zweiten denkbaren Ausführungsform können zwei Dehnstoffelemente in den beiden Räumen vorgesehen sein, so dass sie von den beiden ggf. unterschiedlichen Temperaturniveaus in diesen beiden Wasser enthaltenden Räumen beeinflusst werden. Beide Dehnstoffelemente arbeiten allerdings bei dieser zweiten Ausführungsvariante auf den selben Ventilkörper, allerdings in unterschiedlichen Richtungen, so dass auf diese Weise je nach den unterschiedlichen Temperaturniveaus die Stellung des Ventilkörpers veränderlich ist.

Ein Ausführungsbeispiel eines vorschlagsgemäßen Warmwasser-Speicherbehälters wird anhand der rein schematischen Darstellungen nachfolgend näher erläutert. Dabei zeigt
- Fig. 1: eine Ansicht perspektivisch von oben in das Innere eines Warmwasser-Speicherbe hälters und
- Fig. 2: einen Vertikalschnitt durch den Warmwasser-Speicherbehälter.

In den Zeichnungen ist mit 1 jeweils eine Behälterwand eines Warmwasser-Speicherbehälters bezeichnet, wobei diese Behälterwand 1 zylindrisch verläuft. Im Behälterinneren ist ein Einströmkanal 2 mittels einer U-förmig gebogenen Trennwand 3 geschaffen, wobei aus dem Einströmkanal 2 Wasser in das Hauptvolumen des Speicherbehälters gelangen kann, indem es durch Durchtrittsöffnungen 4 strömt, die in der Trennwand 3 vorgesehen sind.

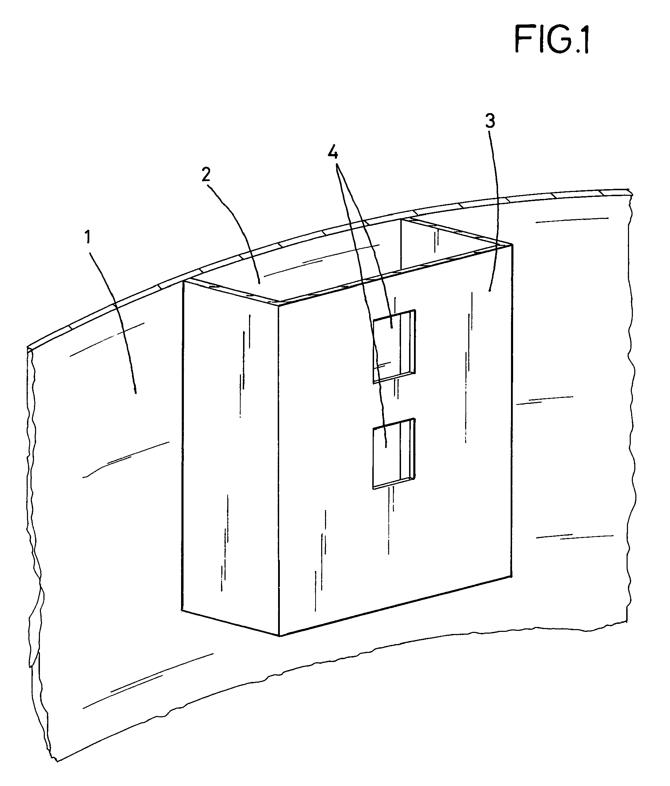

Rein beispielhaft sind in Fig. 1 zwei Durchtrittsöffnungen 4 übereinander vorgesehen, um auf diese Weise das Einströmen von Wasser in unterschiedliche Temperaturzonen im Hauptvolumen des Speicherbehälters zu ermöglichen, wobei diese unterschiedlichen Temperaturzonen geschichtet übereinander vorgesehen sind.

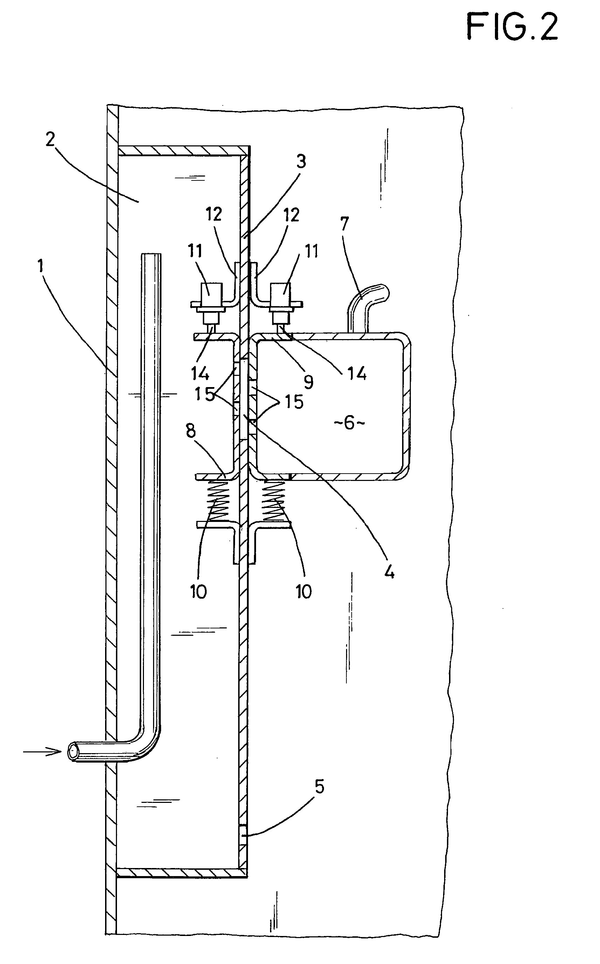

Fig. 2 zeigt den vorschlagsgemäßen Speicherbehälter im Vertikalschnitt. Zugunsten einer übersichtlichen und vereinfachten Darstellung ist bei dieser nicht maßstäblichen Darstellung lediglich eine Durchtrittsöffnung 4 innerhalb der Trennwand 3 dargestellt. Heißes Wasser gelangt in den Einströmkanal 2, der oben durch einen Deckel verschlossen ist, so dass das heiße Wasser ausschließlich durch eine oder die mehreren Durchtrittsöffnungen 4 in der jeweils dem Temperaturniveau entsprechenden Höhe in das Hauptvolumen des Speicherbehälters einströmen kann, wenn die dort vorgesehene Ventilanordnung die jeweilige Durchtrittsöffnung 4 freigibt.

Im unteren Bereich der Trennwand 3 ist eine Zirkulationsöffnung 5 vorgesehen, so dass aus dem unteren Bereich des Hauptvolumens kaltes Wasser in den Einströmkanal 2 gelangen kann.

Wenn die in Fig. 2 dargestellte Ventilanordnung geöffnet ist, kann heißes Wasser aus dem Einströmkanal 2 durch die Durchtrittsöffnung 4 in einen Sammelraum 6 einströmen. Bei hohen Strömungsgeschwindigkeiten verhindert der Sammelraum 6, dass das einströmende Wasser die Temperaturschichten innerhalb des Hauptvolumens des Speicherbehälters durchmischt und verwirbelt. Der Sammelraum dient in einem derartigen Fall als Beruhigungszone, aus welcher das Wasser durch einen Austrittsstutzen 7 in das Hauptvolumen des Speicherbehälters gelangen kann.

Die in Fig. 2 dargestellte Ventilanordnung weist zwei Ventilkörper 8 und 9 auf, von denen der Ventilkörper 8 im Einströmkanal 2 und der Ventilkörper 9 im Sammelraum 6 vorgesehen ist. Beide Ventilkörper sind plattenförmig ausgestaltet, sie weisen an ihrem jeweils oberen und unteren Ende jeweils eine Abwinkelung auf, wobei sie mit der unteren Abwinkelung jeweils auf einer Druckfeder 10 aufstehen, und wobei jeweils auf die obere Abwinkelung ein Dehnstoffelement einwirkt, welches seinerseits ortsfest in einem Montagewinkel 12 gehalten ist. Bei Temperaturanstieg dehnt sich das jeweilige Dehnstoffelement 11 aus, so dass ein Stößel 14 nach unten verlagert wird und den jeweiligen Ventilkörper 8 bzw. 9 gegen die Wirkung der Druckfeder 10 nach unten verschiebt.

Die beiden Ventilkörper 8 und 9 weisen horizontale Schlitze 15 auf, die zueinander versetzt angeordnet sind und in der dargestellten Ventilkonfiguration die Durchtrittsöffnung 4 verschließen.

Wenn in beiden wassergefüllten Räumen, also im Hauptvolumen des Speicherbehälters und im Einströmkanal 2, die Temperaturen gleichermaßen ansteigen, so dehnen sich die beiden Dehnstoffkörper 11 gleichermaßen aus und verlagern die beiden Ventilkörper 8 und 9 gleichmäßig nach unten, so dass die Relativstellung zwischen den beiden Ventilkörpern 8 und 9 unverändert bleibt, demzufolge auch die Schlitze 15 versetzt zueinander bleiben, und dementsprechend das Ventil nach wie vor geschlossen bleibt.

Liegt im Einströmkanal 2 allerdings heißeres Wasser vor als im Hauptvolumen des Speicherbehälters, so dehnt sich das im Einströmkanal 2 befindliche Dehnstoffelement 11 dementsprechend mehr aus als das dem Ventilkörper 9 zugeordnete Dehnstoffelement 11. Der Ventilkörper 8 wird also relativ zum Ventilkörper 9 nach unten verschoben, so dass sich die Schlitze 15 in den beiden Ventilkörpern 8 und 9 teilweise oder ganz überdecken und dementsprechend das heiße Wasser aus dem Einströmkanal 2 durch die Schlitze 15 und die Durchtrittsöffnung 4 in den Sammelraum 6 und durch den Austrittsstutzen 7 in das Hauptvolumen des Speicherbehälters strömen kann.

Bei zwei für unterschiedliche Temperaturschichten vorgesehenen Durchtrittsöffnungen 4, die übereinander im Einströmkanal 2 vorgesehen sind, finden entsprechend angepasste Dehnstoffelemente 11 mit den jeweils geeigneten Temperaturkennlinien Anwendung.

Der Installationsaufwand für einen vorschlagsgemäßen Warmwasser-Speicherbehälter wird im Vergleich zu anderen Speicherbehältern dadurch reduziert, dass in den Einströmkanal 2 unterschiedliche heiße Wässer eingeführt werden können, während ansonsten zwei unterschiedliche Anschlüsse erforderlich wären. Je nach dem Temperaturniveau des einströmenden Wassers wird automatisch die jeweils geeignete Durchtrittsöffnung 4 durch die voll automatisch thermisch arbeitenden und von Fremdenergie unabhängigen Ventile geöffnet, so dass das einströmende Wasser automatisch in die temperaturmäßig geeignete Zone des Hauptvolumens des Speicherbehälters einströmt.

## Patentansprüche

1. Warmwasser-Speicherbehälter einer häuslichen Heizungs-oder Warmwasserinstallation,
mit wenigstens einem ersten, als Strömungskanal bezeichneten, Wasser enthaltenden Raum,
wobei der Strömungskanal an einen zweiten Wasser enthaltenden Raum angrenzt,
und wobei wenigstens eine Durchtrittsöffnung vorgesehen ist, durch welche Wasser von dem einen in den anderen der beiden Räume gelangen kann,
**dadurch gekennzeichnet,**
**dass** die Durchtrittsöffnung (4) mittels eines beweglichen Ventilkörpers (8, 9) verschließbar ist,
und **dass** als Antrieb des Ventilkörpers (8, 9) ein Dehnstoffelement (11) vorgesehen ist, welches temperaturabhängig seine Ausdehnung und dementsprechend die Lage des Ventilkörpers (8, 9) ändert.

2. Speicherbehälter nach Anspruch 1,
**dadurch gekennzeichnet,**
**dass** das Dehnstoffelement (11) gegen die Wirkung einer Feder (10) arbeitend angeordnet ist, welche bei einem Temperaturrückgang das Dehnstoffelement (11) in seine ursprüngliche Konfiguration zurückführt.

3. Speicherbehälter nach Anspruch 1 oder 2,
**dadurch gekennzeichnet,**
**dass** ein Dehnstoffelement (11) vorgesehen ist, welches seine Ausdehnungsänderung über einen Temperaturbereich von mehr als 10°C ausführt.

4. Speicherbehälter nach einem der vorhergehenden Ansprüche,
**dadurch gekennzeichnet,**
**dass** in jedem der beiden Wasser enthaltenden Räume jeweils ein Dehnstoffelement (11) und ein davon beaufschlagter Ventilkörper (8, 9) vorgesehen ist, wobei die beiden Ventilkörper (8, 9) derart angeordnet sind, dass
■ unterhalb einer vorbestimmten Starttemperatur, bei welcher beide Dehnstoffelemente (11) eine vergleichsweise geringe Ausdehnung aufweisen, die Durchtrittsöffnung (4) verschlossen ist,
■ und bei gleichem Temperaturanstieg in beiden Räumen die beiden Ventilkörper (8, 9) durch die beiden Dehnstoffelemente (11) derart bewegt werden, dass die Durchtrittsöffnung (4) verschlossen bleibt,
■ und bei einem Temperaturanstieg, der in dem einen Wasser enthaltenden Raum stärker ist als in dem anderen Raum, wenigsten einer der beiden Ventilkörper (8, 9) relativ zu dem anderen Ventilkörper (8, 9) derart bewegt wird, dass die Durchtrittsöffnung (4) geöffnet wird.

5. Speicherbehälter nach einem der vorhergehenden Ansprüche,
**dadurch gekennzeichnet,**
**dass** der Ventilkörper (8, 9) als Platte ausgestaltet ist, die in der Plattenebene verschiebbar gelagert ist.

6. Speicherbehälter nach Anspruch 4 und 5,
**dadurch gekennzeichnet,**
**dass** die Ventilkörper (8, 9) Durchbrechungen (15) aufweisen, die versetzt zueinander angeordnet sind und die Durchtrittsöffnung (4) unterhalb der Starttemperatur verschließen.

7. Speicherbehälter nach einem der vorhergehenden Ansprüche,
**dadurch gekennzeichnet,**
**dass** in jedem der beiden Wasser enthaltenden Räume jeweils ein Dehnstoffelement vorgesehen ist, die beide den selben Ventilkörper beaufschlagen und derart angeordnet sind, dass sie bei Temperaturanstieg den Ventilkörper in gegenläufige Richtungen zu drängen bestrebt sind.
